# EUROPEAN PATENT APPLICATION

(11) **EP 3 903 649 A1**
(43) Date of publication of application: **03.11.2021**
(21) Application number: 20171882.2
(22) Date of filing: 28.04.2020
(51) Int. Cl.: A47G 21/18, B29D 23/00, B29C 57/04, B31D 5/00, B65G 29/00

(54) **APPARATUS AND METHOD FOR ASSEMBLING TELESCOPIC STRAWS**

(71) Applicant: International Tobacco Machinery Poland SP. Z O.O., 26-600 Radom (PL)
(72) Inventor: GIELNIEWSKI, Adam, 26-600 Radom (PL); ZADECKI, Robert, 26-600 Radom (PL)
(74) Representative: Markieta, Jaroslaw Franciszek

(57) **Abstract**

The object of the invention is an apparatus for assembling telescopic straws comprising: storage containers (2, 3) adapted to feed, next to each other, first straws (A) with a first outside diameter and a first inside diameter, and second straws (B) with a second outside diameter and a second inside diameter, whereas the first outside diameter is smaller than the second inside diameter, and the first straws (A) are bevelled at an acute angle at the end directed towards the second straw (B), a conveyor (4) provided with pockets (5, 6) adapted to convey the first straws (A) and the second straws (B) in a mutually coaxial configuration. The apparatus is characterised by further comprising a straw assembling unit (13) comprising a set of driven assembling rollers (14, 15) with a concave outside surface, whereas the shape of the first assembling roller (14) is adapted so that the roller (14) when coming into contact with the outside surface of the first straws (A) puts the first straws (A) into rotational motion and into axial motion directed from the first lateral edge (16) of the conveyor (4) so as to insert the first straws (A) with the bevelled end into the second straws (B), and the shape of the second assembling roller (15) is adapted so that the roller (15) when coming into contact with the outside surface of the second straws (B) puts the second straws (B) into rotational motion and into axial motion directed from the second lateral edge (17) of the conveyor (4) so as to mount the second straws (B) onto the first straws (A).

## Description

The object of the invention is an apparatus for assembling telescopic straws and a method for assembling telescopic straws.

In the food industry, straws which are usually made of plastic or paper are used to drink various kinds of beverages. These may be both one-part and two-part straws, straight straws or bent straws. Plastic straws are made as one straight element or as an element having an articulated part allowing to bend it. Two-part straws usually have in their structure a lock connecting both parts so that after inserting one part into the other a beverage may be consumed with an already assembled straw without a risk that the connection will be leaky. Such connection allows taking a straw off, for example before wrapping the straw into a foil from which the straw is removed before consuming a beverage and which is unfolded to its maximum length. Such straws are referred to as telescopic straws.

Telescopic straws and apparatuses manufacturing such straws are known from the prior art.

In the document EP 0 276 025, there was disclosed a method for assembling a telescopic straw on a conveyor belt, inspecting and wrapping separately placed straws into a foil which is then welded.

In the document JP03827769, there was disclosed an apparatus for assembling a telescopic straw of two parts which are placed in grooves of a drum conveyor. In that solution, a part of the straw with a greater diameter is put onto the straw with a smaller diameter by means of pushers whose sliding motion is forced by a cam. The straw is locked by means of a ring pressing against the outside surface of the straw with a greater diameter.

The object of the invention is an apparatus for assembling telescopic straws comprising storage containers adapted to feed, next to each other, first straws with a first outside diameter and a first inside diameter, and second straws with a second outside diameter and a second inside diameter. The first outside diameter is smaller than the second inside diameter, and the first straws are bevelled at an acute angle at the end directed towards the second straw. Furthermore, the apparatus comprises a conveyor provided with pockets adapted to convey the first straws and the second straws in a mutually coaxial configuration. The apparatus according to the invention is characterised by further comprising a straw assembling unit comprising a set of driven assembling rollers with a concave outside surface. The shape of the first assembling roller is adapted so that the roller when coming into contact with the outside surface of the first straws puts the first straws into rotational motion and into axial motion directed from the first lateral edge of the conveyor so as to insert the first straws with the bevelled end into the second straws, and the shape of the second assembling roller is adapted so that the roller when coming into contact with the outside surface of the second straws puts the second straws into rotational motion and into axial motion directed from the second lateral edge of the conveyor so as to mount the second straws onto the first straws.

The apparatus according to the invention is further characterised in that the first assembling roller has a working surface greater than the working surface of the second assembling roller.

The apparatus according to the invention is further characterised by comprising at least one forming unit comprising at least one forming mandrel to form the locking structure in the first and/or second straw and a forming roller working with it to form the locking structure in the first and/or second straw.

The apparatus according to the invention is further characterised by comprising at least one second forming unit comprising a second forming mandrel to form the locking structure in the second straw and a second forming roller working with it to form the locking structure in the second straw.

The apparatus according to the invention is further characterised by comprising a mounting unit comprising a set of driven mounting rollers with an at least partially concave outside surface. The shape of the first mounting roller is adapted to put the first straws with the first outside surface into rotational motion and into axial motion directed to the first lateral edge of the conveyor so as to mount the first straws onto the first mandrels of the first forming unit, and the shape of the second mounting roller is adapted to put the second straws with the second outside surface into rotational motion and into axial motion directed to the second lateral edge of the conveyor so as to mount the second straws onto the second mandrels of the second forming unit.

The apparatus according to the invention is further characterised in that the forming units are situated on the opposite sides of the conveyor.

The apparatus according to the invention is further characterised in that the assembling and/or mounting rollers are positioned at an angle α to the axis Y of the conveyor pockets, whereas such angle is in the range between 10 and 170 degrees.

The apparatus according to the invention is further characterised in that the angle α preferably is in the range between 45 and 135 degrees.

The apparatus according to the invention is further characterised in that the mounting rollers and/or the assembling rollers have a concave surface in the direction of their axis of rotation, whereas the line forming such concavity may be: a circle section, an ellipse, a hyperbola, a parabola or another curved line created by connecting points situated at the tops of the circumference of at least three adjacent straws being conveyed.

The apparatus according to the invention is further characterised by having at least one sensor of presence of the straw on the forming mandrel.

The object of the invention is also a method for assembling the telescopic straw comprising steps wherein: the first straws with the first outside diameter are fed from a first storage container, and the second straws with the second outside diameter are fed from a second storage container to the conveyor pockets, whereas the straws are bevelled at one of the ends and directed with the bevelled end towards the second straws. The method according to the invention is further characterised in that by means of the driven assembling rollers of the assembling unit the telescopic straws are assembled by putting the first straw into rotational motion and into axial motion directed from the first lateral edge of the conveyor so as to insert the first straw with the bevelled end into the second straw, and by putting the second straw into rotational motion and into axial motion directed from the second lateral edge of the conveyor so as to mount the second straws onto the first straws.

The method according to the invention is characterised in that before assembling the telescopic straw the locking structures are formed in the first and/or second straw mounted on the mandrel by means of the forming roller.

An advantage of the invention is its small size as compared to known solutions from the prior art, and the simplicity of its structure. Furthermore, the straws are assembled in a very simple and fast way so that they are not exposed to deformation or damage. It was also noted that in the apparatus according to the invention the degree of wear of the rollers was considerably smaller than in inventions from the prior art wherein different solutions using the friction between the straws and the elements putting the straws into rotational and axial motion were applied.

The object of the invention was presented in detail in a preferred embodiment in a drawing in which:
- Fig. 1: shows an apparatus for assembling telescopic straws in a side view;
- Fig. 2: shows an apparatus for assembling telescopic straws in a top view;
- Fig. 3a: shows an apparatus for assembling telescopic straws in a bottom view in the first embodiment;
- Fig. 3b: shows an apparatus for assembling telescopic straws in a bottom view in the second embodiment;
- Fig. 4a: shows a unit forming a lock on a straw B;
- Fig. 4b: shows the unit forming the lock on a straw A;
- Fig. 5: shows a cross-section through conveyor pockets;
- Fig. 6: shows a cross-section through the conveyor pockets with an assembled telescopic straw;

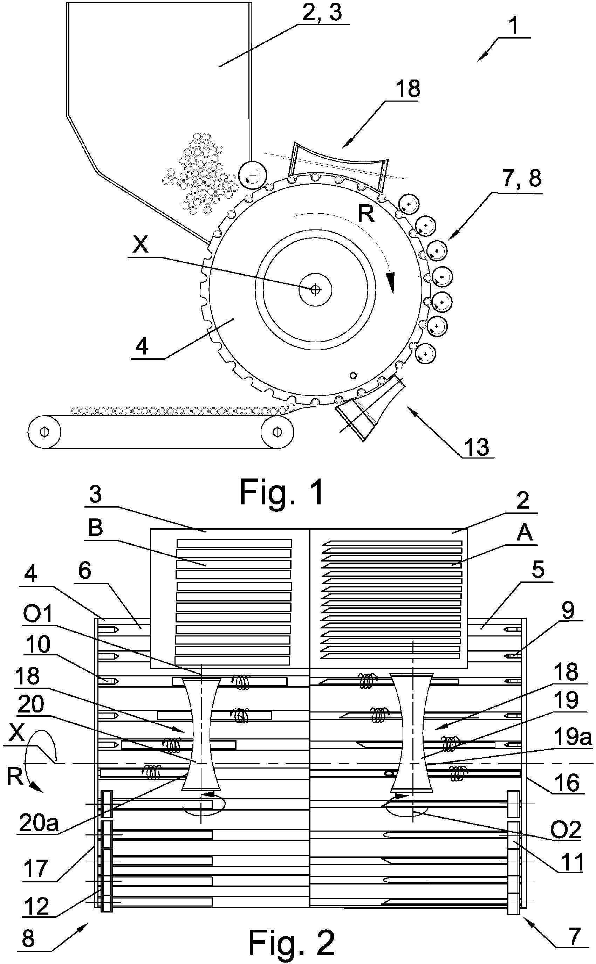

Fig. 1 shows an apparatus 1 for assembling telescopic straws in a side view. The apparatus comprises a storage container 2, 3 for feeding with the straws of the types A and B, whereas the straws A are principally longer and have an outside diameter smaller than an inside diameter of the type B straws. Furthermore, one of the ends of the straw A may be bevelled at a preferably acute angle. In this embodiment, there was shown a drum conveyor 4 having pockets 5, 6 on its external circumferential surface. It is also possible to provide such embodiment wherein a belt or chain conveyor with pockets situated on the working surface conveying individually, parallel to each other, one after another longitudinally aligned pairs of the straws A and B is used. In order to embody the invention on a belt or chain conveyor it is necessary to lead at least a part of the straw flow path on a slideway with a oval shape.

The storage container 2 and 3 is situated above the conveyor 4, tangentially to its working surface so that during rotation of the conveyor 4 the straws A and B are picked up from the storage container 2 and 3 and put into the pockets 5, 6. The straw A placed in the pocket 5 is directed with its bevelled end towards the longitudinally aligned straw B placed in the adjacent pocket 6, whereas the straws are conveyed transversely to the conveying direction.

Subsequently, during the rotation of the conveyor 4 in the direction marked with an arrow R, the straws A and B pushed apart in the direction of lateral edges of the conveyor 4 by means of a mounting unit 18 where they are mounted onto mandrels 9, 10 forming a telescopic straw lock, which was shown in detail in the following figures.

After forming the locking structure at the ends of the straws A and B, they are pushed together by means of the assembling unit 13 so that the straw A is at least partially pushed into the straw B. Telescopic straws created in such a way are transferred to a receiving apparatus, for example a conveyor transferring the telescopic straws to a packer.

Fig. 2 shows an apparatus for assembling the telescopic straws according to the invention in the first embodiment in a top view. The straws A and B are picked up from the storage containers 2 and 3, respectively, and put into the pockets 5 and 6 situated on the working surface of the conveyor 4. Picking up of the straws from the storage container may be supported by vacuum supplied to the pockets 5 and 6 which will be deactivated in the area of operation of the mounting unit 18. The mounting unit 18 consists of two rollers 19 and 20 with a concave outside surface 19a, 20a. The concavity of the rollers refers to the shape of their working surface 19a, 20a which has the greatest diameter at the ends of the roller, whereas such diameter gradually decreases towards its middle portion where it has the smallest diameter. The working surfaces 19a, 20a have a concave surface in the direction of their axes of rotation, whereas the line forming such concavity may be: a circle section, an ellipse, a hyperbola, a parabola or another curved line created by connecting points situated at the tops of the circumference of at least three adjacent straws being conveyed. The rollers 19 and 20 are situated tangentially to the circumferential surface of the conveyor 4 so that the working surfaces of the rollers 19a and 20a remain in contact with at least three straws situated in adjacent pockets for the same straw type. The working surface 19a or the roller 19 has a cut-out with a smaller diameter than the cut-out in the roller 20, which results from the difference in outside diameters of the straw A and the straw B.

In this embodiment, the rollers 19 and 20 are situated substantially perpendicular to the axis X of the conveyor 4 and the conveyed straws A, B. In such a case, the working surfaces of the rollers 19a, 20a will have a concavity with a radius similar to the radius of the curvature of circumferential surface of the conveyor 4 at a point at which they will be tangential to the straws conveyed by the conveyor.

Also possible is such embodiment wherein the axes O1 and O2 of the rollers 19, 20 will be situated at an angle to the axis X of the conveyor 4. In such a case, the working surfaces 19a, 20a of the rollers will have a concavity with the shape of a hyperbola, parabola or ellipse depending on the angle at which they will be situated to the axis X of the conveyor 4 and on the curvature of circumferential surface of the conveyor 4 at a point at which they will be tangential to the straws conveyed by the conveyor.

Each of the rollers 19 and 20 has its own drive (not shown in the drawing) which puts the rollers 19, 20 into rotational motion, whereas the roller 19 makes a rotational motion towards the first side edge 16, and the roller 20 makes a rotational motion towards the second side edge 17. The rollers 19 and 20, by making the rotational motion, cause putting the straws A and B into axial motion towards the lateral edges 16 and 17. Furthermore, at the same time the conveyor 4 makes a rotational motion in the direction R, which causes that the straws A and B when making the axial motion forced by the rotation of the rollers 19 and 20 additionally make a rotational motion, which was shown in Fig. 2. The rotational motion of the rollers 19 and 20 is adjustable, which allows precise moving of the straws A and B in the pockets of the conveyor 4 so that the straws A, B are correctly mounted on the forming mandrels 9, 10 at the moment of emerging from below the mounting unit 18.

The apparatus 1 may be further provided with sensors 31 checking the presence of the straw on the forming mandrels 9, 10. It is aimed at eliminating such situation where the straw is not mounted onto the forming mandrel or is incorrectly mounted, for example it is not pushed close to the lateral edge 16, 17, which causes making the locking structure at a wrong place on the straw. If the absence of the straw or incorrect mounting thereof on the mandrel is detected, the sensors 31 send a signal to a control unit (not shown in the drawing) which stops the operation of the apparatus 1.

The rollers 19 and 20 are made of plastic, rubber, caoutchouc or other material approved for use in the food industry. It is essential that the material of which the rollers are made is characterised by a friction coefficient relative to the material of which the straws are made being sufficiently high to ensure a rotation of the straws A, B as a result of rolling of the rollers 19, 20.

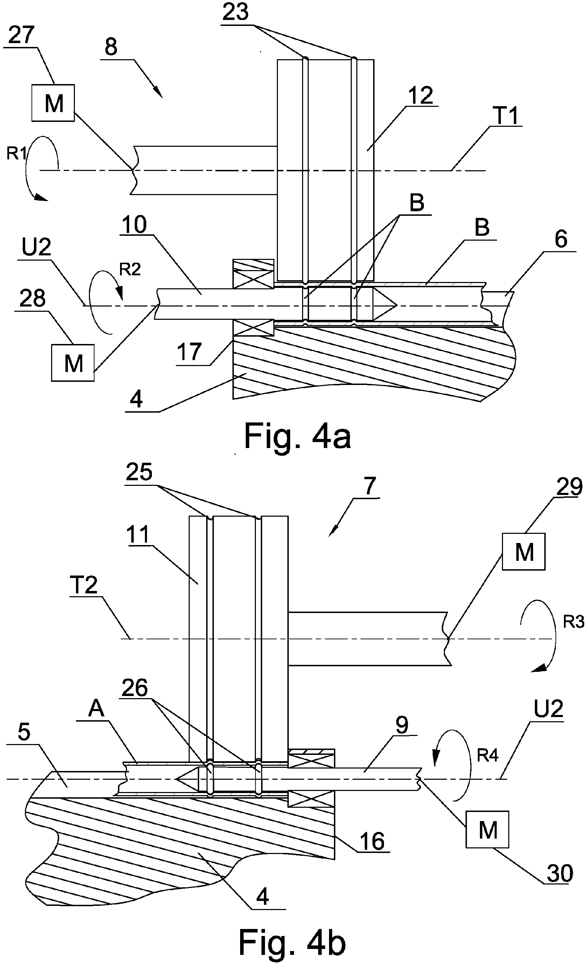

The rotational and axial motion of the straws A and B in the pockets 5 and 6 takes place during the contact of the rollers 19 and 20 with the straws as a result of friction between the surface of the rollers and the surface of the straws. In this way the straws are mounted onto the forming mandrels 9, 10 which form the locking structure. The forming mandrels 9, 10 are situated in the area of the lateral edges 16 and 17 of the conveyor 4 so that their longitudinal axis is coaxial with the longitudinal axis of the pockets 5 and 6. Furthermore, each forming mandrel 9, 10 may be put into rotational motion by means of a drive unit not shown in the drawing. After mounting the straws A, B onto the forming mandrels 9, 10, the straws are subjected to the action of the forming units 7, 8, which was shown in detail in Figs. 4a and 4b.

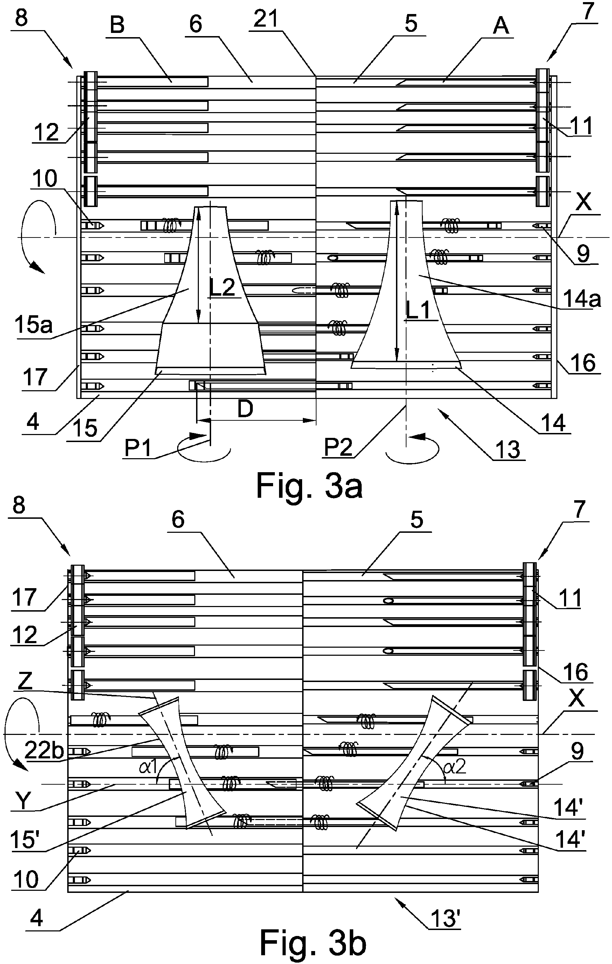

After forming the locking structure on each of the straws A and B, they are subjected to the action of the assembling unit 13, which was shown in detail in Fig. 3a. The assembling unit 13 is formed by two assembling rollers 14 and 15 with the conical shape, whereas the surface forming the cone has a concave surface 14a and 15a. The length L2 of the working surface 15a of the assembling roller 15 is shorter than the length L1 of the working surface 14b of the assembling roller 14. It results from a difference in length of the axial motion which the straw has to make in the conveyor pocket. The straw A has a smaller diameter and is longer than the straw B, so it has to cover a longer distance and make a greater axial motion so that it is inserted into the straw B to an appropriate length D. Therefore, the assembling roller 14 has a longer working surface 14a than the working surface 15a of the assembling roller 15 which axially moves the straw B only to the edge 21 separating the pockets 5 and 6. The axes P1, P2 of the assembling rollers 14, 15 in this embodiment are situated substantially perpendicular to the axis X of the conveyor 4 and to the longitudinal axes of the straws A, B. Also possible is such embodiment wherein the axes P1, P2 of the assembling rollers 14, 15 are situated at an angle different from 90 degrees to the axis X of the conveyor 4. The straws A and B subjected to the action of the assembling unit 13 are removed from the forming mandrels 9, 10 and axially longitudinally moved in the pockets 5, 6 from the edge 16, 17 of the conveyor 4 towards the edge 21 separating the pockets 5, 6. When making the axial longitudinal motion in the pockets 5, 6 the straws A, B also make a rotational motion around their own longitudinal axes. Depending on the length of the straw A, B, the assembling rollers 14, 15 have different lengths of the working surface 14a, 15a. The working surface 14a, 15a is to be understood as the lateral surface of the assembling roller 14, 15 which remains in contact with the straw A, B and causes its rotation and/or axial longitudinal motion. The roller 14 has a longer working surface 14a than the roller 15 because it moves, in the pocket, the straw A which is longer than the straw B and has to make a longer axial motion. Furthermore, during the axial longitudinal motion the straw A has to be moved to such distance which allows inserting it into the straw B to the length D. On the other hand, the roller 15 axially and longitudinally moves the straw B at a shorter distance, namely only up to the edge 21 separating the pocket 5 from the pocket 6.

The apparatus 1 may be further provided with sensors 32 checking the presence of the straw on the forming mandrels 9, 10. It aims at eliminating such situation where the straw is not removed from the mandrel 9, 10 by the assembling roller 15, 16, which will cause a lack of space on the mandrel 9, 10 for the following straw and in incorrect assembly of the telescopic straw. If the presence of the straw on the mandrel 9, 10 is detected, the sensors 32 send a signal to a control unit (not shown in the drawing) which stops the operation of the apparatus 1.

Also possible is such embodiment of the apparatus for assembling the telescopic straws where the straws with an already formed locking structure will be delivered to such apparatus. Then it will be possible to eliminate the mounting unit 18 and the forming units 7, 8 from the apparatus 1. Then the straws with the already formed locking structure will be picked up from the storage containers 2, 3 to the pockets 5, 6 of the conveyor 4, appropriately directed and pushed together by means of the assembling unit 13 so as to make an already assembled telescopic straw.

Fig. 3b shows the assembling unit 13' in the second embodiment, consisting of two concave rollers 14' and 15' situated at the angles α1 and α2, whereas such angles may be equal to each other.

The rollers 14', 15' in this embodiment positioned at an angle to the axis P1, P2 have the shape of a hyperboloid of one sheet. Also possible is such embodiment wherein the working surfaces of the rollers 22a, 22b will have a concavity with the shape of a hyperbola, parabola or ellipse depending on the angle at which they will be situated relative to the axis X of the conveyor 4 and on the curvature of circumferential surface of the conveyor 4 at a point at which they will be tangential to the straws conveyed by the conveyor. The angles α1 and α2 are in the range between 0-90 degrees for the roller 15b and 90-180 degrees for the roller 14b, whereas the angle α1 and α2 are in the range between the axis of the assembling roller P1, P2 and the longitudinal axis Y of the pockets 5, 6. Furthermore, preferably the working surface 22a, 22b of the assembling roller 14', 15' remains in contact with at least two, preferably with three, adjacent straws of the same type A or B. In this embodiment, the assembling rollers 14', 15' may be similar to or the same as the rollers 19, 20 of the mounting unit 18 shown in Fig. 2.

Fig. 4a shows a unit forming a lock 8 on the straw B in a longitudinal cross-sectional view of the pocket 6 of the conveyor 4. After mounting the straw B onto the forming mandrel 10, it is pressed from outside by the forming roller 12 against the mandrel 10. On the outside circumferential surface of the forming roller 12 which presses the straw B against the forming mandrel 10, there is situated at least one notch 23. Two notches 23 are a preferred solution. In the course of pressing, the forming roller 12 is put into rotational motion by means of a drive 27 in a direction marked with an arrow T1 in the drawing. The forming roller 10 powered by a drive 28 may rotate in a direction opposite to the rotation of the roller 12, which was marked with an arrow U1. On the outside circumferential surface of the forming mandrel 10, there is situated at least one groove 24. The forming roller 12 is positioned in such a way relative to the mandrel 10 that the notch 23 locally pushes the straw B into the groove 24 of the forming mandrel 10. A preferred solution is to arrange at least two grooves 24 on the circumferential surface of the forming mandrel 10.

Fig. 4b shows the forming unit 7 designed to form the lock A in a longitudinal cross-sectional view of the pocket 6 of the conveyor 4. After mounting the straw A onto the forming mandrel 9, it is pressed from outside by the forming roller 11 against the mandrel 9. On the outside circumferential surface of the forming roller 11 which presses the straw A against the forming mandrel 9, there is situated at least one groove 25. A preferred solution is to arrange at least two grooves 25 next to each other. In the course of pressing, the forming roller 11 is put into rotational motion by means of a drive 29 in a direction marked with an arrow T2 in the drawing. The forming roller 9 powered by a drive 30 may rotate in a direction opposite to the rotation of the roller 11, which was marked with an arrow U2. On the outside circumferential surface of the forming mandrel 9, there is situated at least one notch 26. The forming roller 11 is positioned in such a way relative to the mandrel 9 that the notch 26 locally pushes the straw A into the groove 25 of the forming mandrel 11. A preferred solution is to arrange at least two notches 26 on the circumferential surface of the forming mandrel 9.

Also possible is such embodiment of the forming unit 7, 8 wherein the forming rollers 11, 12 or the forming mandrels 9, 10 do not have any rotational drive. For example, if the forming roller 11, 12 is put into rotational motion by the external drive 27, 29, then its rotational motion, its contact with the straw A, B placed on the forming mandrel 9, 10 and the friction occurring between them will cause putting the forming mandrel 9, 10, with the straw A, B mounted on it, into rotational motion.

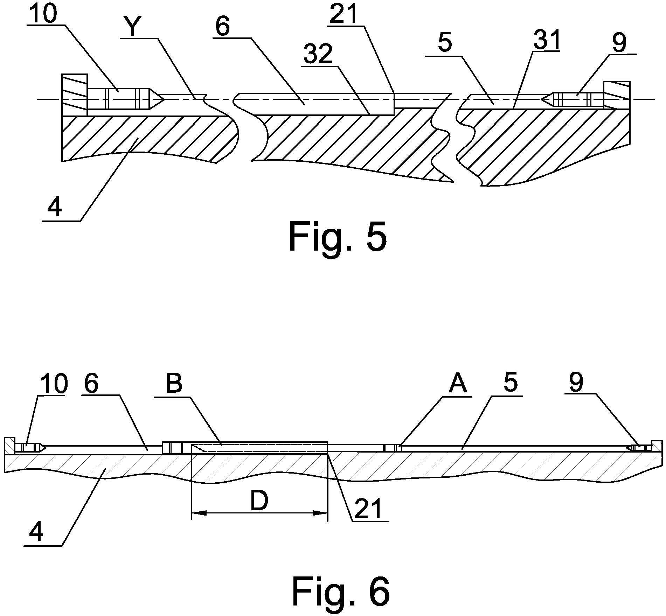

Fig. 5 shows a cross-section along the pocket 5, 6 of the conveyor 4. The pocket 5 is designed to convey the straw A, which is why its depth is slightly smaller than the depth of the pocket 6 designed to convey the straw B which has a greater outside diameter. Since the bottom 31 of the pocket 5 is situated higher than the bottom 32 of the pocket 6, there is a peripheral step 21 visible at a point where the pockets are joined. Despite a difference in depth of the pockets 5, 6, they have a common longitudinal axis Y. Furthermore, the forming mandrels 9, 10 are situated lengthwise in the axis Y. While conveying the straws A, B in the pockets 5, 6 on the conveyor 4, they are removed from the forming mandrels 9, 10 by means of the assembling unit 13 and conveyed lengthwise in the pockets towards the threshold 21. The straw B is pushed maximally close to the threshold 21 while the straw A is conveyed along the pocket 5 so that one of the ends is inserted into the straw B, which was shown in Fig. 6. Furthermore, when pushing the straw A into the straw B the straw A makes, apart from a longitudinal axial motion, a rotational motion which facilitates the inserting and prevents a deformation of the ends of the straws A, B. After inserting the straw A into the straw B to the required length D, the roller of the mounting unit stops moving the straw axially in the pocket and stops rotating it around its longitudinal axis. In a further possible embodiment, during the insertion of the straw A into the straw B the straw B remains immovable in the pocket 6, i.e. does no longer make any longitudinal axial motion and any rotational motion. Also possible is such embodiment wherein during the insertion of the straw A into the straw B the straw B makes a rotational motion around the longitudinal axis and in addition may be in the course of lengthwise movement in the pocket 6. It depends on the place at which the threshold 21 is situated and on the length of the working surface of the mounting rollers.

## Claims

1. Apparatus for assembling telescopic straws comprising:
storage containers (2, 3) adapted to feed, first straws (A) with a first outside diameter and a first inside diameter, and second straws (B) with a second outside diameter and a second inside diameter, whereas the first outside diameter is smaller than the second inside diameter, and the first straws (A) are bevelled at an acute angle at the end directed towards the second straw (B), the first straws (A) and the second straws (B) being fed next to each other,
a conveyor (4) provided with pockets (5, 6) adapted to convey the first straws (A) and the second straws (B) in a mutually coaxial configuration,
**characterised by** further comprising
a straw assembling unit (13) comprising a set of driven assembling rollers (14, 15) with a concave outside surface, whereas the shape of the first assembling roller (14) is adapted so that the roller (14) when coming into contact with the outside surface of the first straws (A) puts the first straws (A) into rotational motion and into axial motion directed from the first lateral edge (16) of the conveyor (4) so as to insert the first straws (A) with the bevelled end into the second straws (B),
and the shape of the second assembling roller (15) is adapted so that the roller (15) when coming into contact with the outside surface of the second straws (B) puts the second straws (B) into rotational motion and into axial motion directed from the second lateral edge (17) of the conveyor (4) so as to mount the second straws (B) onto the first straws (A).

2. Apparatus as in claim 2 **characterised in that** the first assembling roller (14) has a working surface (14a) greater than the working surface (15a) of the second assembling roller (15).

3. Apparatus as in claim 1 or 2 **characterised by** further comprising at least one forming unit (7, 8) comprising at least one forming mandrel (9, 10) to form a locking structure in the first straw (A) and/or second straw (B) and a forming roller (11, 12) working with it to form the locking structure in the first straw (A) and/or second straw (B).

4. Apparatus as in claim 3 **characterised by** comprising at least one second forming unit (8) comprising a second forming mandrel (10) to form the locking structure in the second straw (B) and a second forming roller (12) working with it to form the locking structure in the second straw (B) .

5. Apparatus as in any of the claims 1 to 4 **characterised by** comprising a mounting unit (18) comprising a set of driven mounting rollers (19, 20) with an at least partially concave outside surface, whereas the shape of the first mounting roller (19) is adapted to put the first straws (A) with the first outside surface into rotational motion and into axial motion directed to the first lateral edge (16) of the conveyor (4) so as to mount the first straws (A) onto the first mandrels (9) of the first forming unit (7), and the shape of the second mounting roller (20) is adapted to put the second straws (B) with the second outside surface into rotational motion and into axial motion directed to the second lateral edge (17) of the conveyor (4) so as to mount the second straws (B) onto the second mandrels (10) of the second forming unit (8).

6. Apparatus as in claim 3 **characterised in that** the forming units (7, 8) are situated on the opposite sides of the conveyor (4).

7. Apparatus as in any of the claims 1 to 6 **characterised in that** the assembling (14, 15) and/or mounting rollers (19, 20) are positioned at an angle (α) to the axis (Y) of the conveyor (4) pockets (5, 6), whereas such angle is in the range between 10 and 170 degrees.

8. Apparatus as in claim 7 **characterised in that** the angle (α) is preferably in the range between 45 and 135 degrees.

9. Apparatus as in any of the claims 1 to 8 **characterised in that** the mounting rollers (19, 20) and/or the assembling rollers (14, 15) have a concave surface in the direction of their axis of rotation, whereas the line forming such concavity may be: a circle section, an ellipse, a hyperbola, a parabola or another curved line created by connecting points situated at the tops of the circumference of at least three adjacent straws being conveyed.

10. Apparatus as in any of the claims 1 to 9 **characterised by** having at least one sensor (31, 32) of presence of the straw (A, B) on the forming mandrel (9, 10).

11. Method for assembling the telescopic straw comprising steps wherein:
the first straws (A) with the first outside diameter are fed from a first storage container (3), and the second straws (B) with the second outside diameter are fed from a second storage container (2) to the conveyor (4) pockets, whereas the straws (A) are bevelled at one of the ends and directed with the bevelled end towards the second straws (B),
**characterised in that**
by means of the driven assembling rollers (14, 15) of the assembling unit (13) the telescopic straws are assembled by putting the first straw (A) into rotational motion and into axial motion directed from the first lateral edge (16) of the conveyor (4) so as to insert the first straw (A) with the bevelled end into the second straw (B), and by putting the second straw (B) into rotational motion and into axial motion directed from the second lateral edge (17) of the conveyor (4) so as to mount the second straws (B) onto the first straws (A).

12. Method as in claim 11 **characterised in that** that before assembling the telescopic straw the locking structures are formed in the first (A) and/or second straw (B) mounted on the mandrel (9, 10) by means of the forming roller (11, 12).
